Europäisches Patentamt

European Patent Office

Office européen des brevets

(11) Publication number: **0 303 402 B1**

# EUROPEAN PATENT SPECIFICATION

(45) Date of publication of patent specification: **07.01.93**  (51) Int. Cl.5: **C03C 8/02**, C04B 41/86

(21) Application number: **88307217.5**

(22) Date of filing: **04.08.88**

(54) Method of producing tiles by single firing.

(30) Priority: **10.08.87 JP 199508/87**
**10.08.87 JP 199509/87**

(43) Date of publication of application:
**15.02.89 Bulletin  89/07**

(45) Publication of the grant of the patent:
**07.01.93 Bulletin  93/01**

(84) Designated Contracting States:
**DE ES FR GB IT NL**

(56) References cited:
**DE-A- 2 435 502
GB-A- 1 454 496
GB-A- 2 090 242
IT-A- 1 010 205**

**SPRECHSAAL, vol. 120, no. 4, April 1987,
pages 308-312, Coburg, DE; W. KERSTAN:
"Keramische Glasuren-Aufbau, Farbgebung,
Dekortechniken und Rohstoffe"**

**SPRECHSAAL, vol. 116, no. 8, August 1983,
pages 648-652, Coburg, DE; D. STEFANOW:
"Keramische Glasuren Stand des Wissens in
Osteuropa, Teil III: Aufbereitung, Auftrag,
Brand"**

(73) Proprietor: **INAX CORPORATION
3-6, Koiehonmachi
Tokoname-Shi Aichi(JP)**

Proprietor: **NIPPON FRIT CO., LTD.
5-5, Minatocho 4-Chome
Handa-Shi Aichi(JP)**

(72) Inventor: **Hatanaka, Kimitatsu
INAX Corp., 3-6, Koiehonmachi
Tokoname-Shi, Aichi(JP)**
Inventor: **Ohnuki, Tohru
Inax Corp., 3-6, Koiehonmachi
Tokoname-Shi, Aichi(JP)**
Inventor: **Toki, Takao
Nikkon Frit Co., 5-5, Minatocho 4-chome,
Handa-Shi, Aichi(JP)**
Inventor: **Matsubara, Takanari
Nippon Frit Co., 5-5, Minatocho 4-chome,
Handa-Shi, Aichi(JP)**

(74) Representative: **Jenkins, Peter David et al
PAGE, WHITE & FARRER 54 Doughty Street
London WC1N 2LS(GB)**

EP 0 303 402 B1

## Description

The present invention relates to a method of producing tiles. More particularly, it relates to producing interior wall tiles by single firing.

Heretofore, it has bean a common practice to produce interior wall tiles by the process of so-called double firing in which the firing operation is performed twice. In other words, the conventional process for producing interior wall tiles includes body forming, drying, first firing (biscuit firing), cooling, glazing, and secondary firing (gloss firing).

Interior wall tiles are produced by double firing because they should be glazed thicker than exterior wall tiles. If a thickly glazed green body undergoes single firing, the thick glaze layer prevents the free passage off gases released from the green body during firing. This causes the gases to break the half molten or fully molten glaze layer, giving rise to bubbling which leads to voids and cracks in the glaze layer.

In the firing process, gases generate from green bodies as the result of thermal decomposition of carbonate minerals and combustion of organic substances. The gas generation depends on the firing conditions. If firing is performed by raising the firing temperature very slowly, the gas generation comes to an end at about 700 to 800°C. By contrast, in the efficient production by the use of a roller hearth kiln in which the firing temperature is raised rapidly, the gas generation continues to take place until the atmosphere temperature exceeds 1000°C because the inside of a body is slower in temperature rise than the surface of a body. At an ambient temperature of about 1000°C, the conventional tile glaze softens and melts to cover the surface of a body, and the molten glaze is subject to bubbling if gases generate from the inside of a body.

This drawback is absent in the double firing system, because the body to be fired for the second time is in the form of biscuit which release no gases in the second firing, and even a thick glaze layer covering a body is free of bubbling. Thus it is possible to produce interior wall tile with a glossy smooth glazed surface.

As mentioned above, the conventional glaze is not suitable for the production of interior wall tile by single firing because it is subject to bubbling which leads to a defective surface. Therefore, interior wall tile has conventionally been produced by the double firing system, which needs more fuel and labor for firing and hence is poor in productivity.

The present invention provides a method of producing interior wall tiles which comprises forming green bodies, applying a proper amount of a glaze specified below, drying the glazed green bodies, firing the green bodies under such conditions that the sintered bodies have sufficient strength and the glaze melts to cover the surface of the sintered body uniformly, and cooling the fired bodies, the tile glaze comprising 100 parts by weight of the following glaze components (a) to (i) and 0 to 15 parts by weight of pigment.

(a) Frit of the following composition:     50 to 90 parts by weight

| | |
|---|---|
| $SiO_2$ | 55 to 65 wt% |
| $Al_2O_3$ | 10 to 18 wt% |
| CaO | 18 to 25 wt% |
| Alkali metal oxides | 0.5 to 4 wt% |
| $ZrO_2$ | 0 to 10 wt% |
| $B_2O_3$ | 0 to 2 wt% |
| One or more of MgO, BaO, SrO, and ZnO | |

(b) Feldspar:                8 to 25 parts by weight
(c) Clay:                     0.5 to 10 parts by weight
(d) Zircon:                   0 to 20 parts by weight
(e) Quartz:                   0 to 10 parts by weight
(f) Alumina:                  0 to 5 parts by weight
(g) Titania:                  0 to 10 parts by weight
(h) Barium carbonate:         0 to 10 parts by weight
(i) Zinc oxide:               0 to 5 parts by weight

Embodiments of the present invention will now be described by way of example only with reference to the accompanying drawings, in which:

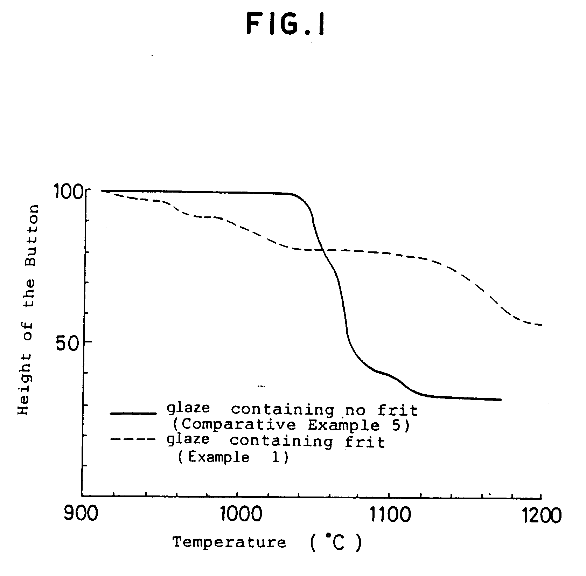

Fig. 1 is a graph showing the results of measurements in Examples of the present invention.

The frit used in the method of the present invention contains alkali metal oxides and $B_2O_3$ in very small amounts; therefore, it decreases in viscosity very slowly even when heated above its softening point and it

EP 0 303 402 B1

does not cover the entire surface of a body until it is heated far above its softening point. This means that gases released from a green body easily pass through the particles of the frit without causing bubbling.

The following is a detailed description of each component and preferred embodiments of the frit used in the method of the present invention.

The frit contains $SiO_2$ and $Al_2O_3$ as the major constituents which are responsible for the high softening point of the frit. They constitute the network of alumina silicate glass.

The fit contains CaO and alkali metal oxides (abbreviated as $R_2O$ hereinafter) which partly break the network of alumina silicate glass and promote the vitrification, thereby lowering the softening point of the frit.

The frit contains 55~65 wt% of $SiO_2$, 10~18 wt% of $Al_2O_3$, 18~25 wt% of CaO, and 0.5~4 wt% of $R_2O$. With a content outside the specified range, the frit will have an excessively low softening point, which leads to bubbling, or the frit will have an excessively high softening point, which leads to a situation in which the glaze does not melt completely although the body is in the thoroughly sintered state. The preferred range of content is 60~64 wt% for $SiO_2$, 12~16 wt% for $Al_2O_3$, 19~23 wt% for CaO, and 1~3 wt% for $R_2O$. The frit may optionally contain $Li_2O$ so that the glaze provides as smooth a surface as in the case of double firing. The content of $Li_2O$ should preferably be 0.5 to 1.5 wt%. With less than 0.5 wt%, it does not contribute to the smooth glazed surface; and with more than 1.5 wt%, it causes pinholes to the glazed surface.

The frit may contain up to 10 wt% in total of $B_2O_3$, MgO, ZnO, SrO, and BaO, according to need. These oxides lower the softening point of the frit; however, if contained excessively, they lower the softening point to such an extent that the frit suddenly decreases in viscosity when it softens. The preferred content is less than 2 wt%, especially less than 1 wt% for $B_2O_3$, less than 5 wt%, especially less than 3 wt% for MgO, less than 5 wt%, especially less than 3 wt% for ZnO, less than 5%, especially less than 3% for SrO, and less than 5 wt%, especially less than 3 wt% for BaO. The total amount of MgO, BaO, SrO, and ZnO should be 10 wt% or less.

The frit may optionally contain 10 wt% or less of $ZrO_2$ to impart a hiding power to the glaze.

The frit may further contain other oxides (e.g., BaO), chlorides, and sulfates, if necessary. Their total amount should be less than 3 wt%, especially less than 1 wt%.

The frit can be produced by mixing the ordinary frit raw materials, melting them, and cooling and crushing the resulting mixture. For example, the production process comprises crushing dried raw materials such as feldspar, silica stone, and limestone, screening the powder, and melting the powder at 1300~1500°C for 1~1.5 hours, followed by quenching.

The thus obtained frit is made into the tile glaze by crushing in a ball mill containing water, alcohol, or other adequate liquid. During crushing, it may be incorporated with feldspar, clay, zircon (zirconium silicate), quartz, alumina, zinc oxide, titania, barium carbonate, and a proper pigment.

The tile glaze has the following features. Is is composed of 100 parts by weight of component (a) (as the frit) and components (b) to (i) mentioned above, and 0 to 15 parts by weight of pigment.

Feldspar (b) and clay (c) raise the melting point of the glaze. For the glaze to have an adequate melting point, the content of feldspar should be 8~25 parts by weight, preferably 15~21 parts by weight, and the content of clay (e.g., kaolin) should be 0.5~10 parts by weight, preferably 2~4 parts by weight.

Zircon (zirconium silicate) (d) imparts a hiding power to the glaze. The content of zircon should be 0~20 parts by weight, preferably 10~15 parts by weight.

Quartz (e), alumina (f), titania (g), barium carbonate (h), and zinc oxide (i) control the melting point of the glaze and the gloss of the glazed surface. Their content should be 0~10 parts by weight for quartz, 0~5 parts by weight for alumina, 0~10 parts by weight for titania, 0~10 parts by weight for barium carbonate, and 0~5 parts by weight for zinc oxide.

The pigment is added, if necessary, to improve the design of the glazed surface of tile. Any pigment used for tile is acceptable for this purpose. The amount of she pigment should be 0~15 parts by weight for 100 parts by weight of the total amount of components (a) to (i).

To prepare the tile glaze the above-mentioned components (a) to (i) and optional pigment and other components in a desired ratio are suspended in water, alcohol, or other adequate liquid, if necessary, by the aid of a suspending agent. This is accomplished by mixing all the solid components in a ball mill and continuing ball milling after adding 30~45 parts by weight of water and 0.05~0.50 parts by weight of suspending agent for 100 parts by weight of the component mixture. Thus there is obtained a glaze slip.

The thus obtained tile glaze is then used for the production of tiles. According to the present invention, tiles are produced in the following manner. At first, tile bodies are formed by the ordinary forming method (such as pressing). To the tile bodies is applied the above-mentioned tile glaze in such an amount that the glaze thickness after drying is 0.1 to 2 mm, preferably 0.3 to 1 mm. The application of the glaze may be performed in any manner; but cascade glazing is preferable. (Waterfall method is a coating process in which the tile bodies are conveyed rapidly through a "curtain" of a glaze slip falling from a slit.) After

3

glazing, the tile bodies are dried and then fired. The firing should preferably be performed by means of a roller hearth kiln in which the firing zone is kept at 1150~1250°C. The firing makes the green bodies into the sintered bodies having a strength for interior wall tile. During the firing, the bodies are sintered first and then the glaze melts to cover the surface of the bodies in uniform thickness. The fired tile is removed from the roller hearth kiln and is ready for shipment after packaging.

The invention will be described in more detail with reference to the following examples and comparative examples, in which experiments were carried out with green bodies of tile measuring 10 x 10 x 0.5 cm which were produced by forming at 350 kg/cm$^2$ from a ball-milled mixture composed of 45 parts by weight of agalmatolite, 40 parts by weight of clay, 10 parts by weight of limestone, and 5 parts by weight of chamotte, followed by drying. The green bodies were fired in a roller hearth kiln, 25 meters long, at a speed of 1.0 m/min, with the maximum temperature in the firing zone kept at 1190°C.

*Example 1*

A frit was prepared from feldspar, quartz, and limestone by drying, milling, sieving, melting in a crucible at 1400°C for 1 hour, and quenching. The chemical composition of the frit is shown in Table 1.

Seventy parts by weight of this frit was mixed with 15 parts by weight of feldspar, 2 parts by weight clay, and 13 parts by weight of zircon by ball-milling. The resulting mixture was crushed together with 33 parts by weight of water and 0.20 parts by weight of suspending agent (carboxylic acid type) by ball-milling. Thus there was obtained a glaze slip.

This glaze slip was applied to the above-mentioned green bodies of tile by waterfall method in such an amount that the glaze thickness after drying was about 0.6 mm. After drying, the glazed bodies were fired in a roller hearth kiln having a firing zone kept at 1190°C.

Thus there were obtained interior wall tile of high quality having a smooth, thick, glossy glaze layer free of bubbling.

*Examples 2 to 8*

Different kinds of frits having the composition as shown in Table 1 were prepared in the same manner as in Example 1, except that the ratio of raw materials was changed and additional raw materials (zircon, borax, magnesia, and zinc oxide) were used. The frit was made into a glaze slip and the glaze slip was applied to the green bodies, followed by drying and firing, in the same manner as in Example 1.

Thus there was obtained interior wall tile having a good surface appearance as in Example 1.

*Comparative Examples 1 to 4*

The same procedure as in Example 1 was repeated except that the composition was changed as shown in Table 1. All of the resulting tile suffered from bubbling in the glaze layer.

*Comparative Example 5*

A raw glaze (containing no frit) having the composition as shown in Table 1 was prepared from 43 parts by weight of feldspar, 6.5 parts by weight quartz, 4.0 parts by weight of clay, and 13.0 parts by weight of limestone. This glaze was applied to the green bodies, followed by drying and firing. The glaze layer was defective on account of bubbling.

Table 1

| | Chemical Composition of Frit | | | | | | | | |
|---|---|---|---|---|---|---|---|---|---|
| Example | $SiO_2$ | $Al_2O_3$ | CaO | $Na_2O_3$ | $K_2O$ | $Li_2O$ | $ZrO_2$ | $B_2O_2$ | Total of MgO, ZnO, and BaO |
| 1 | 61.4 | 14.0 | 24.1 | 0.5 | - | - | - | - | - |
| 2 | 61.4 | 14.0 | 22.6 | - | 0.5 | 0.5 | - | - | ZnO 1.0 |
| 3 | 63.4 | 12.0 | 19.6 | 1.0 | - | 1.0 | - | 1.0 | ZnO 2.0 |
| 4 | 57.5 | 12.2 | 19.6 | - | 1.7 | - | 8.5 | - | - |
| 5 | 60.0 | 16.0 | 18.5 | 1.0 | - | 1.0 | - | 1.5 | BaO 1.0 |
| 6 | 58.0 | 14.0 | 24.0 | 1.0 | 1.0 | 1.0 | - | - | MgO 1.0 |
| 7 | 61.0 | 14.0 | 20.0 | - | 1.5 | 1.5 | - | - | ZnO 1.0 BaO 1.0 |
| 8 | 59.8 | 12.6 | 21.6 | - | - | 2.0 | - | - | ZnO 3.0 SrO 1.0 |
| (1) | 60 | 12 | 20 | 4.0 | 3.0 | - | - | 1.0 | - |
| (2) | 53 | 19 | 18 | 2.0 | - | 1.0 | - | 4.0 | ZnO 3.0 |
| (3) | 68 | 6 | 23 | 1.0 | - | 1.0 | - | 1.0 | - |
| (4) | 55 | 14.0 | 27 | 2.0 | - | - | - | 2.0 | - |
| (5) | 54.0 | 8.6 | 10.0 | 2.0 | 2.7 | - | 9 | 0.7 | Total of MgO and ZnO:13 |
| Remarks: Comparative Examples are indicated by parenthesized numbers. | | | | | | | | | |

To investigate how the glaze made by the method of the present invention softens with temperature, the following experiment was carried out. The glaze in Example 1 and the raw glaze in Comparative Example 5 were formed at 10 kg/cm² into cylindrical specimens, 0.2 cm in diameter and 0.3 cm high. (This specimen will be called "button" hereinafter.) The buttons were heated in the atmosphere of air from normal temperature to 1200°C at a rate of 10°C/min. During the heating, the height of the button, which changed with time, was measured using a microscope. The results are shown in Fig. 1, with the abscissa representing the temperature and the ordinate representing the height of the button in terms of index, with that before firing being 100.

It is noted from Fig. 1 that the button of the raw glaze rapidly softens as the temperature exceeds about 1040°C and it continues to soften as the temperature rises further. By contrast, the button of the glaze in Example 1 begins to soften at about 900°C but softens very slowly at temperatures above that. It still retains a considerably high viscosity at high temperatures of 1100 to 1150°C.

The above-mentioned results indicate that the frit used in the method of the present invention retains its high viscosity even at high temperatures. Therefore, the particles of the frit remain discrete during firing, permitting the free passage of gasses released from the bodies being fired. This prevents the bubbling. The frit sufficiently softens to cover the surface of the body uniformly in the final stage of firing, in which the bodies reaches the maximum temperature in the firing zone, releasing no more gases.

*Examples 9 to 14 and Comparative Examples 6 to 9*

Glazes were prepared in the same manner as in Example 1 by combining any one of the frit Nos. 1 to 3 shown in Table 1 with feldspar, clay, zircon, and other components in the ratio shown in Table 2. The glazes were applied to green bodies, followed by drying and firing.

In Examples 9 to 14, there were obtained interior wall tile of high quality having a smooth, thick, glossy glaze layer free of bubbling. By contrast, in Comparative Examples 6 to 8, bubbling occurred during firing, in Comparative Example 9, the glaze was lacking in gloss.

5

Table 2

(Ratio: parts by weight)

| Example | Frit No. | Frit | Feldspar | Clay | Zircon | Quartz | Alumina | Titania | Barium carbonate | Zinc oxide | Pigments * |
|---|---|---|---|---|---|---|---|---|---|---|---|
| 9 | 3 | 68 | 17 | 2 | 13 | - | - | - | - | - | Silicate pigment 0.5 |
| 10 | 2 | 60 | 21 | 2 | 13 | - | - | - | - | 4 | Silicate pigment 1.0<br>Double oxide pigment 0.5 |
| 11 | 2 | 55 | 20 | 2 | 10 | 10 | 3 | - | - | - | - |
| 12 | 3 | 80 | 15 | 5 | - | - | - | - | - | - | Double oxide pigment 10.0<br>Silicate pigment 3.0 |
| 13 | 1 | 60 | 20 | 2 | 10 | - | - | 8 | - | - | Single oxide pigment 0.5<br>Metal oxide 0.5 |
| 14 | 3 | 55 | 20 | 2 | 10 | 4 | 2 | - | 7 | - | Silicate pigment 1.0 |
| (6) | 3 | 95 | 3 | 2 | - | - | - | - | - | - | - |
| (7) | 2 | 70 | - | 5 | 10 | 15 | - | - | - | - | Silicate pigment 2.0 |
| (8) | 1 | 70 | - | 5 | - | - | - | 15 | - | 5 | Silicate pigment 1.5<br>Metal oxide 1.5 |
| (9) | 3 | 50 | 30 | - | 13 | 5 | 2 | - | - | - | Silicate pigment 1.5 |

Comparative Examples are indicated by parenthesized numbers.

* The amount of pigment is expressed in terms of parts by weight for 100 parts by weight of frit and other components.

The preferred embodiments of the present invention can provide a method of producing interior wall tiles having a fine, thick, smooth glaze layer by a single firing.

The preferred embodiments of the present invention can also provide a method for producing interior wall tiles efficiently and economically.

6

## Claims

1. A method of producing interior wall tiles which comprises forming green bodies, applying a proper amount of a glaze specified below, drying the glazed green bodies, firing the green bodies under such conditions that the sintered bodies have sufficient strength and the glaze melts to cover the surface of the sintered body uniformly, and cooling the fired bodies, the tile glaze comprising 100 parts by weight of the following glaze components (a) to (i) and 0 to 15 parts by weight of pigment.

   (a) Frit of the following composition:     50 to 90 parts by weight

| | |
|---|---|
| $SiO_2$ | 55 to 65 wt% |
| $Al_2O_3$ | 10 to 18 wt% |
| CaO | 18 to 25 wt% |
| Alkali metal oxides | 0.5 to 4 wt% |
| $ZrO_2$ | 0 to 10 wt% |
| $B_2O_3$ | 0 to 2 wt% |
| One or more of MgO, BaO, SrO, and ZnO | |

   (b) Feldspar:                    8 to 25 parts by weight
   (c) Clay:                        0.5 to 10 parts by weight
   (d) Zircon:                      0 to 20 parts by weight
   (e) Quartz:                      0 to 10 parts by weight
   (f) Alumina:                     0 to 5 parts by weight
   (g) Titania:                     0 to 10 parts by weight
   (h) Barium carbonate:            0 to 10 parts by weight
   (i) Zinc oxide:                  0 to 5 parts by weight

2. A method according to claim 1, wherein the frit contains 60 to 64 wt% of $SiO_2$, 12 to 16 wt% of $Al_2O_3$, 19 to 23 wt% of CaO, and 1 to 3 wt% of alkali metal oxides.

3. A method according to claim 1 or 2, wherein the frit further contains 0.5 to 1.5 wt% of $Li_2O$.

4. A method according to claim 1, 2 or 3, wherein the frit contains 2 wt% or less of $B_2O_3$, 5 wt% or less of MgO, 5 wt% or less of ZnO, 5 wt% or less of SrO, and 0.5 wt% or less of BaO.

5. A method according to any foregoing claim, wherein the glaze contains 15 to 21 parts by weight of (b) feldspar, 2 to 4 parts by weight of (c) clay, and 10 to 15 parts by weight of (d) zircon.

6. A method according to any foregoing claim, wherein the firing is accomplished by conveying the green bodies through a roller hearth kiln.

## Patentansprüche

1. Verfahren zum Herstellen von Innenwandfliesen, welches das Bilden von Rohlingen, das Auftragen einer angemessenen Menge einer Glasur, die unten beschrieben ist, das Trocknen der glasierten Rohlinge, das Brennen der Rohlinge unter solchen Bedingungen, daß die gesinterten Körper ausreichende Festigkeit haben und die Glasur schmilzt, um die Oberfläche des gesinterten Körpers einheitlich zu bedecken, und das Kühlen der gebrannten Körper umfaßt, wobei die Glasur der Fliesen 100 Gewichtsteile der folgenden Glasurkomponenten (a) bis (i) und 0 bis 15 Gewichtsteile Pigment umfaßt.

   (a) Fritte der folgenden Zusammensetzung:     50 bis 90 Gewichtsteile

| | |
|---|---|
| SiO$_2$ | 55 bis 65 Gew.-% |
| Al$_2$O$_3$ | 10 bis 18 Gew.-% |
| CaO | 18 bis 25 Gew.-% |
| Alkalimetalloxide | 0,5 bis 4 Gew.-% |
| ZrO$_2$ | 0 bis 10 Gew.-% |
| B$_2$O$_3$ | 0 bis 2 Gew.-% |
| eines oder mehrere aus MgO, BaO, SrO und ZnO | |

|  |  |
|---|---|
| (b) Feldspat: | 8 bis 25 Gewichtsteile |
| (c) Ton: | 0,5 bis 10 Gewichtsteile |
| (d) Zirkonium: | 0 bis 20 Gewichtsteile |
| (e) Quarz: | 0 bis 10 Gewichtsteile |
| (f) Aluminiumoxid: | 0 bis 5 Gewichtsteile |
| (g) Titanoxid: | 0 bis 10 Gewichtsteile |
| (h) Bariumcarbonat: | 0 bis 10 Gewichtsteile |
| (i) Zinkoxid: | 0 bis 5 Gewichtsteile |

2. Verfahren nach Anspruch 1, worin die Fritte 60 bis 64 Gew.-% SiO$_2$, 12 bis 16 Gew.-% Al$_2$O$_3$, 19 bis 23 Gew.-% CaO und 1 bis 3 Gew.-% Alkalimetalloxide enthält.

3. Verfahren nach Anspruch 1 oder 2, worin die Fritte weiter 0,5 bis 1,5 Gew.-% Li$_2$O enthält.

4. Verfahren nach Anspruch 1, 2 oder 3, worin die Fritte 2 Gew.-% oder weniger B$_2$O$_3$, 5 Gew.-% oder weniger MgO, 5 Gew.-% oder weniger ZnO, 5 Gew.-% oder weniger SrO und 0,5 Gew.-% oder weniger BaO enthält.

5. Verfahren nach einem der vorhergehenden Ansprüche, worin die Glasur 15 bis 21 Gewichtsteile von (b) Feldspat, 2 bis 4 Gewichtsteile von (c) Ton und 10 bis 15 Gewichtsteile von (d) Zirkonium enthält.

6. Verfahren nach einem der vorhergehenden Ansprüche, worin das Brennen durch Durchleiten der Rohlinge durch einen Rollenherdofen ausgeführt wird.

## Revendications

1. Méthode de fabrication de carreaux muraux d'intérieur qui comprend la formation de corps verts, l'application d'une quantité appropriée d'un émail décrit ci-dessous, le séchage des corps verts émaillés, la cuisson des corps verts de sorte que les corps frittés soient suffisamment résistants et que l'émail fonde pour recouvrir uniformément la surface du corps fritté, et le refroidissement des corps cuits, l'émail des carreaux comprenant 100 parties en poids des composants d'émail suivants (a) à (i) et 0 à 15 parties en poids de pigment.
   (a) Fritte de composition suivante : 50 à 90 parties en poids

| | |
|---|---|
| SiO$_2$ | 55 à 65 % en poids |
| Al$_2$O$_3$ | 10 à 18 % en poids |
| CaO | 18 à 25 % en poids |
| Oxydes de métal alcalin | 0,5 à 4 % en poids |
| ZrO$_2$ | 0 à 10 % en poids |
| B$_2$O$_3$ | 0 à 2 % en poids |
| Un ou plusieurs composés parmi MgO, BaO, SrO, et ZnO. | |

|  |  |
|---|---|
| (b) Feldspath : | 8 à 25 parties en poids |
| (c) Argile : | 0,5 à 10 parties en poids |
| (d) Zircon : | 0 à 20 parties en poids |
| (e) Quarts : | 0 à 10 parties en poids |
| (f) Oxyde d'aluminium : | 0 à 5 parties en poids |

EP 0 303 402 B1

| (g) Dioxyde de titane : | 0 à 10 parties en poids |
| (h) Carbonate de baryum : | 0 à 10 parties en poids |
| (i) Oxyde de zinc : | 0 à 5 parties en poids |

2. Méthode selon la revendication 1, dans laquelle la fritte contient 60 à 64 % en poids de $SiO_2$, 12 à 16 % en poids de $Al_2O_3$, 19 à 23 % en poids de CaO, et 1 à 3 % en poids d'oxydes de métal alcalin.

3. Méthode selon les revendications 1 ou 2, dans laquelle la fritte contient de plus 0,5 à 1,5 % en poids de $Li_2O$.

4. Méthode selon les revendications 1, 2 ou 3, dans laquelle la fritte contient 2 % en poids ou moins de $B_2O_3$, 5 % en poids ou moins de MgO, 5 % en poids ou moins de ZnO, 5 % en poids ou moins de SrO, et 0,5 % en poids ou moins de BaO.

5. Méthode selon l'une quelconque des revendications précédentes, dans laquelle l'émail contient 15 à 21 parties en poids de feldspath (b), 2 à 4 parties en poids d'argile (c), et 10 à 15 parties en poids de zircon (d).

6. Méthode selon l'une quelconque des revendications précédentes, dans laquelle la cuisson s'effectue en faisant passer les corps verts au travers d'un four à rouleaux.

# FIG.1